## Europäisches Patentamt

(19) **European Patent Office**

**Office européen des brevets**

(11) Publication number: **0 099 653**

**A2**

(12) # EUROPEAN PATENT APPLICATION

(21) Application number: **83303595.9**

(22) Date of filing: **22.06.83**

(51) Int. Cl.³: **B 65 G 53/08**

(30) Priority: **29.06.82 US 393468**

(43) Date of publication of application:
**01.02.84 Bulletin 84/5**

(84) Designated Contracting States:
**AT BE CH LI NL SE**

(71) Applicant: **WORLD INSTITUTE OF TECHNOLOGY**
**4009 C Bridgeport Way West**
**Tacoma Washington(US)**

(72) Inventor: **Lovejoy, Billy Brent**
**4213 Arbordale Avenue West**
**Tacoma Washington 98466(US)**

(74) Representative: **Sawers, Lawrence Peter et al,**
**PAGE, WHITE & FARRER 5 Plough Place New Fetter**
**Lane**
**London EC4A 1HY(GB)**

(54) **System for conveying and processing aggregate materials.**

㊼ A conveying and processing system for aggregate material which includes a conveying pipe (2), a means for conveying aggregate material as a homogeneous pseudo-gas in the conveying pipe (6) and a cyclone (4) coupled to an end of the conveying pipe for receiving the aggregate material and for separating moisture in the conveying pipe from the aggregate material. In addition, the output of the cyclone (4) can be fed into other processing means such as a cleaner and classifier (50), autogeneous crusher (70) and/or pelletizer (102).

FIG. 7

- 1 -

## SYSTEM FOR CONVEYING AND PROCESSING AGGREGATE MATERIALS

This invention relates to systems for conveying and processing materials and more particularly to systems for conveying and processing aggregate materials.

In the prior art there exist systems for conveying and processing aggregate materials. Such systems usually include some type of mechanical and conveying device such as a conveying belt and mechanical processing machines such as crushers and compactors.

While such conveying and transferring systems are usually capable of performing their tasks, they have certain disadvantages. The disadvantages can be divided into essentially three categories, cost related, function related and pollution related.

In the class of cost related disadvantages, systems typically require expensive machinery which utilizes great amounts of energy and require extensive periodic maintenance. The functionally related disadvantages are that the conveying and processing devices are relatively inefficient and the mechanical crusher is not able to quickly crush the aggregate to a very fine powder. The pollution related disadvantages are caused because the aggregate material itself, such as coal, comprises a mixture which extends from large pieces about two inches in diameter to fine powder and dust. It is this fine powder and dust which creates the problem. Since the conveying means such as a conveyor belt is open and the crushing and compacting machines are also open, a great amount of fine powder and dust is thrown up by the conveying and processing system. To overcome this problem requires that a large cover be built over the conveying and processing means and such covers are very expensive. In addition, if covers are built over the conveying and processing means, an additional disadvantage occurs in that the air contains the fine dust and powder and the possibility of an explosive mixture is high. Accordingly, the large covers must be either filled with inert gas or must be carefully ventilated to prevent the accumulation of the fine powder and dust.

Accordingly, it is the general object of the present invention to provide a conveying and processing system for aggregate materials which is low in cost, efficient, pollution free and highly reliable.

It is a further object of the preferred embodiments of the present invention to provide a conveying and processing system for aggregate materials which processes the aggregate material while it is being conveyed.

According to the present invention, a conveying and processing system for aggregate material comprises: a conveying pipe; a means for conveying aggregate material as a homogeneous pseudo-gas in a conveying pipe, said means conveying said aggregate material in said pipe by creating a zero velocity boundary layer of gas around the interior surface of said conveying pipe and a high speed, smooth gas flow in a remainder of said conveying pipe and by mixing said aggregate material into said high speed, smooth gas flow at a predetermined volumetric ratio of gas to aggregate material; and a cyclone coupled to the end of the conveying pipe for receiving the aggregate material and for separating moisture in the conveying pipe from the aggregate material. A suitable conveying means described and illustrated in our co-pending application No. 83302727.9 of May 13, 1983, claiming priority from United States Patent Application Serial No. 378,472 of May 14, 1982.

If the conveying pipe must be very long, a booster can be provided in the conveying pipe. Furthermore, to process the aggregate material, a cleaner and classifier and/or autogenous crusher can be connected to the output of the cyclone.

The above mentioned features and objects of the present invention will become more apparent with reference to the following description taken in conjunction with the accompanying drawings wherein like reference numerals and labels denote like elements and in which:

FIGURE 1 is a block diagram of a basic conveying and processing system for aggregate material in accordance with the teachings of the present invention;

- 4 -

FIGURE 2 is a block diagram of the conveying means of Figure 1;

FIGURE 3 is a partial cross-sectional view of the physical construction of the conveying means of Figure 1;

FIGURE 4 is a block diagram of a conveying and processing system in accordance with the teachings of the present invention which further includes a booster;

FIGURE 5 is a partial cross-sectional view illustrating one type of booster used in the system of Figure 4;

FIGURE 6 is a block diagram of another type of booster used in the system of Figure 4;

FIGURE 7 is a further block diagram of a conveying and processing system in accordance with the teachings of the present invention which further includes a cleaner and classifier;

FIGURE 8 is a block diagram of a cleaner and classifier utilized in Figure 7;

FIGURE 9 is a partial cross-sectional view illustrating a classifying chamber utilized in the cleaner and classifier described in Figure 8;

FIGURE 10 is an external view of the cleaner and classifier of Figure 7;

FIGURE 11 is a partial block diagram illustrating the addition of the autogenous crusher to the system of Figure 7;

FIGURE 12 is a block diagram of the autogenous crusher of Figure 11;

FIGURE 13 is a partial cross-sectional side view of a crushing chamber of the autogenous crusher of Figure 12;

FIGURE 14 is a top view of the crushing chamber of Figure 12;

FIGURE 15 is a partial cross-sectional view illustrating the construction details of the conveying means utilized in the autogenous crusher of Figure 12;

FIGURE 16 is an enlarged partial side view of the auger flights located towards the end of the barrel of the conveying means of Figure 15;

FIGURE 17 is a partial block diagram of a conveying and processing system in accordance with the teachings of the present invention which further includes a pelletizer;

FIGURE 18 is a block diagram of one type of pelletizer of Figure 17;

FIGURE 19 is a cross-sectional view illustrating another type of pelletizer utilized in Figure 17; and

FIGURE 20 is a flying knife utilized in the pelletizer of Figure 19.

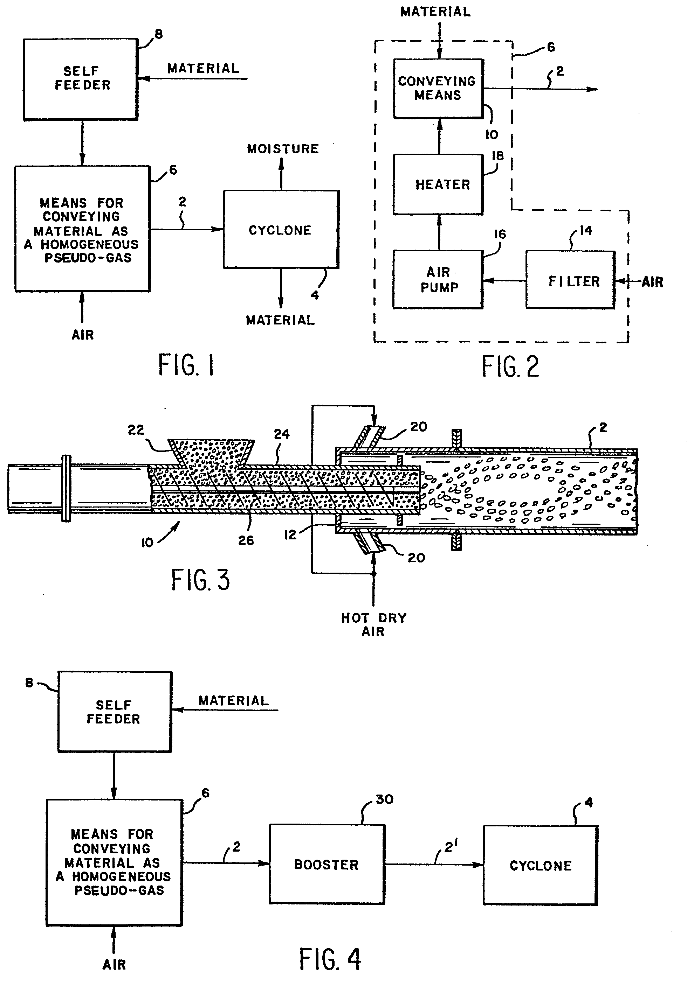

Referring to Figures 1, 2 and 3, shown therein is a basic system for conveying and processing aggregate materials. In this system the aggregate material is conveyed through a conveying pipe 2 to a cyclone 4 located at some distance from the original location of the aggregate material and the processing which is to occur is the removal of moisture from the aggregate material.

The system shown in Figure 1 includes a means for conveying aggregate material as a homogeneous pseudo-gas 6. Such a means is described in our co-pending application of even date claiming priority from United States Patent
Application Serial No. 378,472 filed May 14, 1982. A self-
feeder 8 of any conventional design is utilized to feed the
aggregate material into the means for conveying the aggregate material 6.

Referring to Figure 2 shown therein are the elements
of the means for conveying aggregate material as a homogeneous pseudo-gas 6. The means 6 includes a conveying means
10 such as is shown in cross-section in Figure 3. To the
air chamber 12 of the conveying means 10 is applied hot,
dry air which is under relatively low pressure (less than
10 PSI). This hot, dry air is achieved by passing the air
through a filter 14 which removes the water contained
therein. The air is then supplied to the air pump 16. The
air pump 16 in turn supplies the air to a heater 18 which
heats the air to approximately the boiling point of water.
The hot, dry air is then supplied to the air pipes 20 of
the air chamber 12.

The filter 14 is preferably a desecant type filter
which dries the air. The air pump should be preferably a
variable speed air pump and it is preferred that a variable
displacement air pump with a silicon controlled rectifier
speed control which has high efficiency be utilized. The
heater 18 can be any type of heater whether it is inside
the air line or outside the air line. However, if the
aggregate material to be conveyed is a combustible material
such as coal, it is preferred than an external type heater
such as a heat exchanger be utilized. It should further be
apparent that if the air pump 16 can withstand the high
temperatures from the heater, it would be possible to place the heater before the air pump. In addition, since the air applied to the conveying means 10 is at substantially the boiling point of water, it is further preferable to make the first few sections (about 20 feet) of the conveying pipe 2 from a material which is unaffected by the high temperature of the air. Such a material could be thin wall steel.

In operation, the aggregate material is picked up by the self feeder and fed to the hopper 22 of the conveying means 10. The aggregate material is then pushed down the barrel 24 of the conveying means 10 by auger flights 26. The hot, dry air introduced through the air pipes 20 reflects from the rear of the air chamber 12 and completely fills the air chamber around the barrel 24. In addition, once a seal is formed in the end of the barrel 24 by the aggregate material, the hot, dry air flows down the conveying pipe 2 and forms a thin zero velocity boundary layer around the interior surface of the conveying pipe 2 while at the same time creating a high velocity air flow through the central portion of the conveying pipe 2. Furthermore, if the cyclone 4 is located of the order of 300 feet from the means 6, the aggregate material to be conveyed should be conveyed as a straight flow and this is accomplished by placing the air pipe 20 directly across from each other. If on the other hand, the cyclone is located at a greater distance of the order of 1,500 feet from the means 6, the aggregate material should be rifled through the conveying pipe 2 and the rifling is accomplished by displacing the air pipes 20 relative to each other. In this manner, a spiraling smooth air flow is created.

Once a seal of aggregate material is formed in the end of the barrel 24, the aggregate material is introduced piece by piece into the air flow and begins to be conveyed down the pipe as a homogeneous pseudo-gas. In addition, the system is set up such that the volumetric ratio of hot, dry air to aggregate material is approximately 20 to 1. Therefore, there is substantially more air than aggregate material in the conveying pipe 2 and there are spaces between the aggregate material being conveyed through the conveying pipe 2. Therefore, each piece, particle, grain, etc. of the aggregate material in the conveying pipe 2 is surrounded by hot, dry air as it is being conveyed through the conveying pipe 2. Since the hot, dry air is at substantially the boiling point of water, any moisture or any other liquid whose boiling point is lower than the boiling point of water which is contained in the aggregate will turn into a gas with the results that the aggregate material will be dried as it passes through the conveying pipe 2. When the aggregate material reaches the cyclone 4, it settles to the bottom of the cyclone and the moisture is drawn out through the top of the cyclone. At this point it is important that the aggregate material which is discharged from the cyclone 4 should not be placed in contact with moisture and should be maintained in the dry environment.

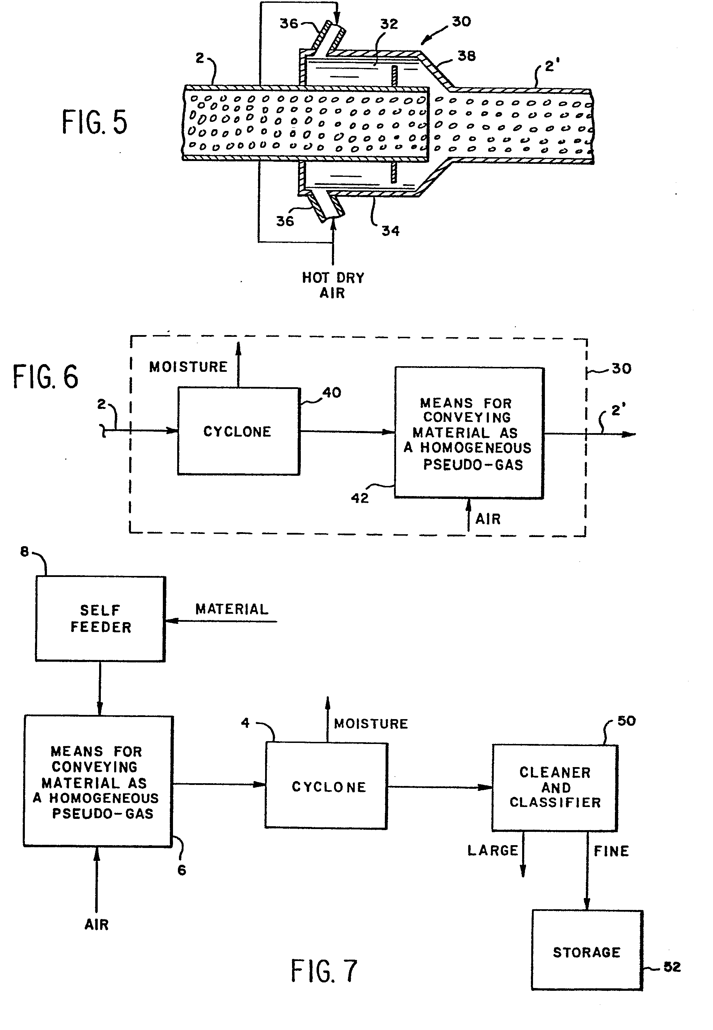

In the event the cyclone 4 is located at a great distance from the conveying means 6, it may be necessary to add a booster 30 into the conveying pipe 2 as shown in Figure 4 The booster 30 may perform two functions. The first function would be to restore the air to the zero velocity boundary layer which has been lost as a result of friction so that the aggregate material can continue to be conveyed properly through the conveying pipe 2'. The second function concerns drying. In the event the aggregate material contains a great deal of moisture, it may be necessary to dump the air in the conveying pipe 2 so that the moisture contained is eliminated and the aggregate material further dried. The first function is performed by the booster shown in Figure 6.

Referring to the booster in Figure 5, the conveying pipe 2 is terminated in an air chamber 32 which consists of a pipe 34 which is larger in diameter than the conveying pipe 2. Typically, the pipe 34 is 50 percent larger in diameter than the conveying pipe 2. The pipe 34 is closed at its end and similar to the air chamber of the conveying means 10, hot, dry air is injected into the air chamber 32 via air pipes 36. The air pipes 36 are offset relative to each other so as to create a spiraling air flow in the air chamber 32 in a similar manner to the spiraling air flow created in the air chamber 12 of the conveying means 10 to cause the aggregate material to be rifled through the conveying pipe 2. The end of the pipe 34 which is opposite to the closed end is connected to the continuation of the conveying pipe 2' via a tapered portion 38. The tapered portion 38 conducts the air into the continuation pipe 2'. The amount of hot, dry air required to be injected by the booster is typically determined quantitatively and need only be sufficient to restore the zero velocity boundary layer. Typically, the air required to be injected via the air pipes 36 is about 300 cubic feet per minute.

Referring to Figure 6 shown therein is a booster 30 which would be utilized to dump the moisture out of the conveying pipe 2. Essentially, the booster 30 consists of another cyclone 40 into which the conveying pipe 2 dumps the aggregate material. The moisture comes off the top of the cyclone and the aggregate material is fed into a second means for conveying aggregate material as a homogeneous pseudo-gas 42 and the output of the means 42 conveys the material out in the continuation pipe 2' in substantially the same manner as the original conveying means 6 and the material is again being transferred in hot, dry air and the drying continues.

Typically, aggregate material consists of a mixture of many different types and sizes of material. Therefore, it is usually desirable to clean and classify aggregate material after it has been transferred. In addition, if the aggregate material is to be crushed to a fine powder, it is also desirable to remove that portion of the material which is already a fine powder so that energy and time can be conserved since the fine powder need not be crushed. Therefore, as is shown in Figure 7, a cleaner and classifier 50 is connected to the output of the cyclone 4. The cleaner and classifier 50 further has as its output large pieces of aggregate and fine powders. The fine powders are of a size which is smaller than some predetermined size and are stored in storage 52.

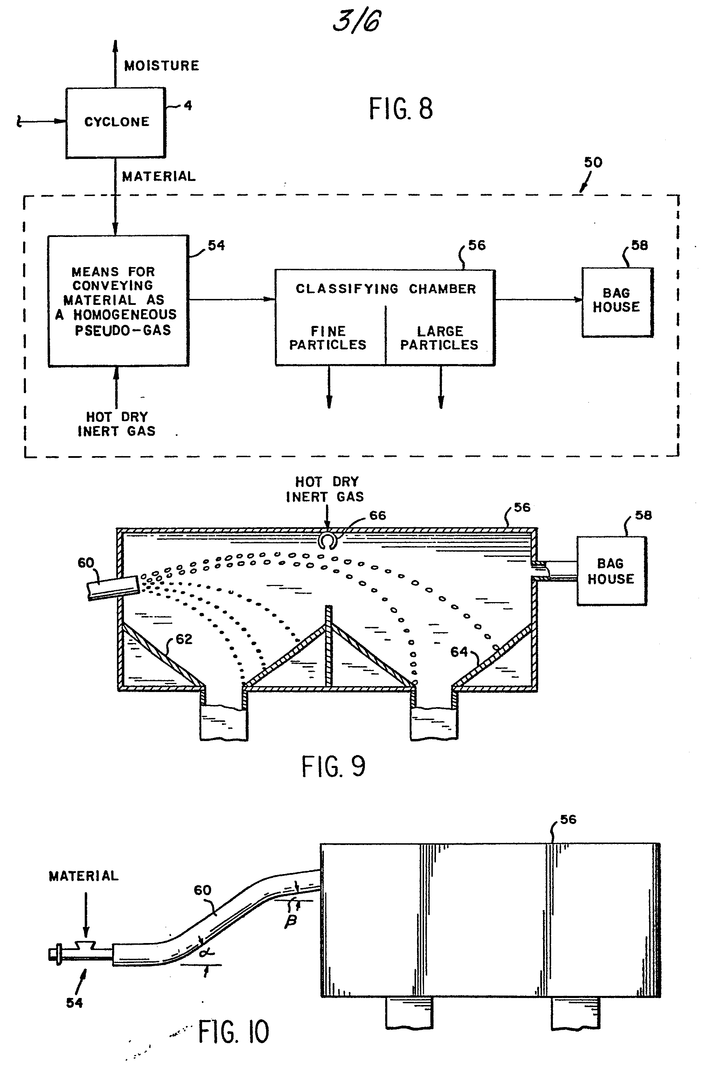

Referring to Figure 8 shown therein is a block diagram of a cleaner and classifier in accordance with the teachings of the present invention. The output of the cyclone 4 is dumped directly into the hopper of another means for conveying aggregate material as a homogeneous pseudo-gas 54. Instead of utilizing air in this means 54, it is preferable to use hot, dry inert gas since in the classifying chamber 56 there is a great deal of a dust created and if the aggregate material is a flammable material such as coal, there would be a great danger of explosion in the classifying chamber 56. In addition, since nitrogen has a tendency to attach itself around the outside of very fine particles, it is further desirable to utilize an inert gas which is not nitrogen. A bag house 58 is connected to the classifying chamber 56. The bag house maintains a constant suction on the classifying chamber 56 and draws out the dust and other extremely fine particles which are floating in the classifying chamber 56. In the classifying chamber the aggregate material is classified by volume and mass.

Referring to Figure 9, the output pipe 60 of the means 54 fires the aggregate material into the classifying chamber 56. In the bottom portion of the classifying chamber 56 is provided at least two hoppers 62 and 64 and it should be apparent that if it is desirable to classify the material into more than two classes, more than two hoppers can be utilized up to the number of classes that it is desirable to divide the aggregate material into.

Referring to Figure 10 shown therein is the conveying means 54 connected to its output pipe 60. The output pipe 60 enters the chamber 56 near the top portion thereof. Furthermore, as is shown in the figures, the output pipe 60 is bent up an angle $\alpha$ then bent downwardly to an angle $\beta$. Typically, the angle $\alpha$ is about $50^{\circ}$ from the horizontal and the angle $\beta$ is about $25^{\circ}$ from the horizontal. In addition, the length of the portion at the angle $\alpha$ should be approximately 40 to 60 feet to allow the flow to stabilize after making the turn and that portion at the angle $\beta$ is typically 10 feet.

In operation, hot, dry inert gas is utilized in the conveying means 54. Furthermore, the conveying means is set up such that the volumetric ratio of gas to aggregate material ranges from 200 to 1 up to 400 to 1. Again, in addition, it is not required that the hot, dry inert gas be as hot as the hot dry air originally utilized in the means 6. Furthermore, the means 54 is arranged such that the flow of material is straight and not rifled.

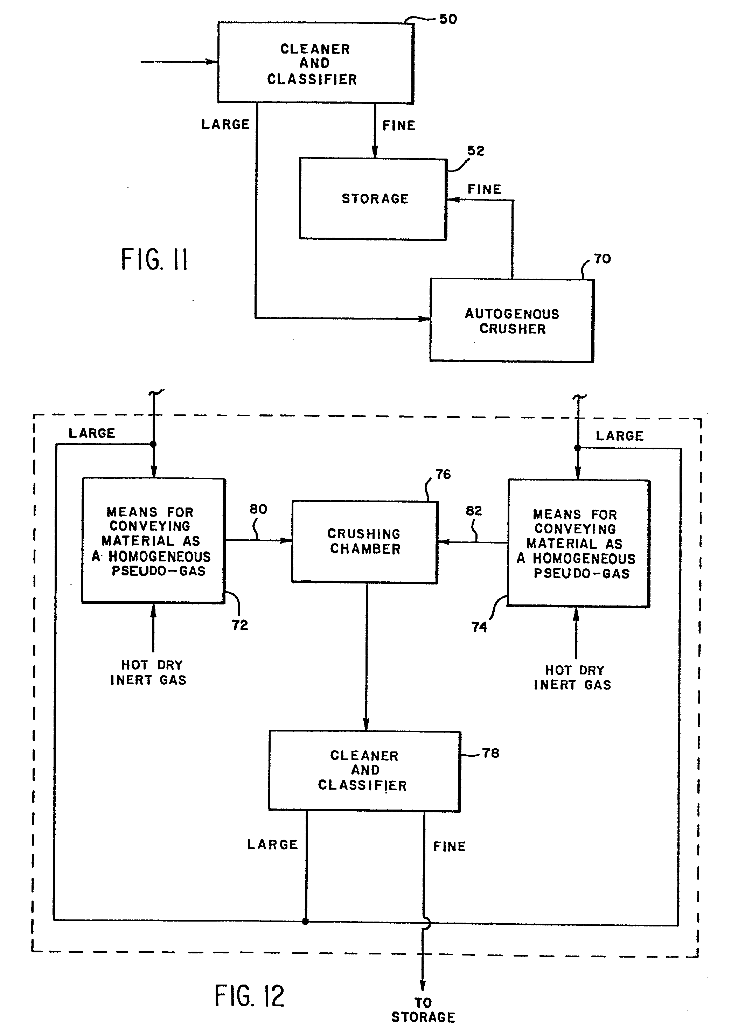

Aggregate material enters the output pipe 60 and after the first bend tends to move towards the bottom of the pipe 60. As a result of the movement towards the bottom of the pipe 60 at the first bend, a reactive force is generated which causes the material to roll over as it approaches the second bend and, therefore, the material as it is fired into the classifying chamber 56 is towards the top portion of the output pipe 60. As is shown in Figure 9 the heavier and denser particles travel the farthest distance and land in the hopper 64 while the lighter and smaller particles travel less distance and end up in the hopper 62. Furthermore, if it is desirable to classify the fine particles into more hoppers, it is desirable to provide air knives or curtains in the classifying chamber of varying strengths and at varying angles such as the air knife 66. The air knife consists of a pipe running transversely of the chamber 56. A longitudinal groove is provided in the pipe and hot, dry inert gas under pressure is injected into the pipe and a stream of air in the form of a curtain or knife blade is created. Such air knives or curtains have a dramatic effect on light small particles and can be utilized to provide a fine classification of the fine particles. The bag house 58 is a standard type bag house and sucks the dust and very fine particles out of the atmosphere in the classifying chamber 56. If the aggregate does not contain much undesirable material in the form of very fine particles and the very fine particles and dust are in fact a desirable material, the output of the bag house 58 can be further transferred to the storage 52. If it is desirable to crush the large pieces of the aggregate material from the classifying chamber 50, the large pieces of aggregate material can be fed into an autogenous crusher 70 as shown in Figure 11. The autogenous crusher 70 is shown in block diagram form in Figure 12 and essentially consists of another two means for conveying aggregate material as a homogeneous pseudo-gas 72 and 74. The outputs of the means 72 and 74 are provided to a crushing chamber 76 and the output of the crushing chamber is supplied to another cleaner and classifier 78 which is substantially the same in construction as the cleaner and classifier 50 described above. The fine particles from the cleaner and classifier 78 are fed to storage while the large pieces of aggregate material are fed back to the inputs of the conveying means 72 and 74.

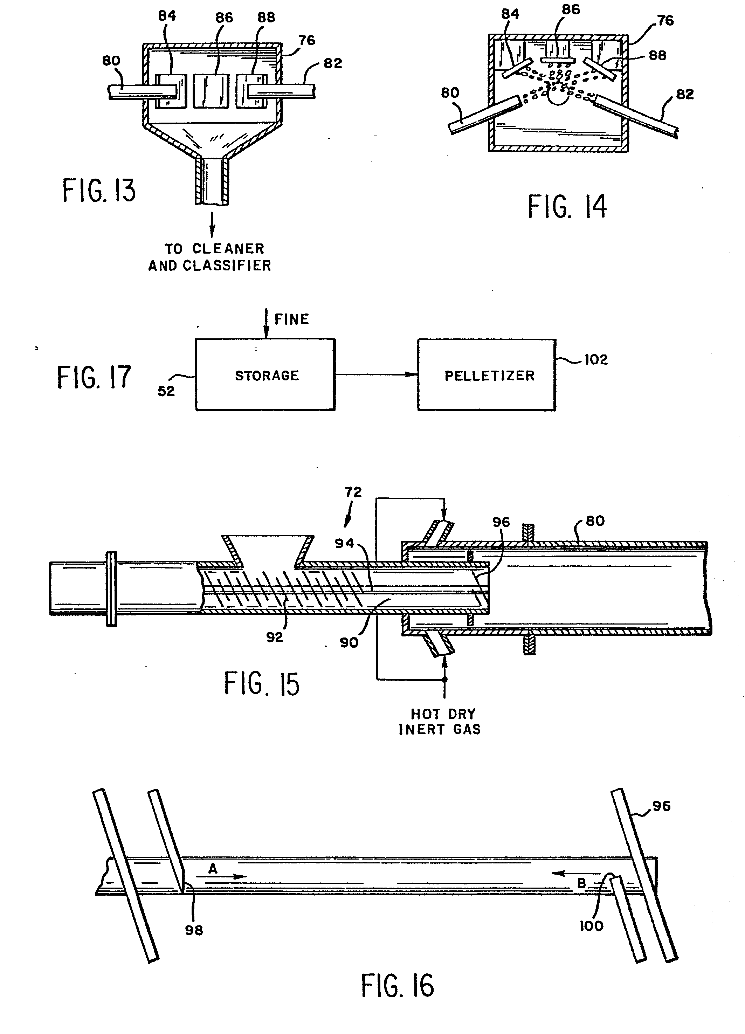

Referring to Figures 13 and 14 shown therein is one example of the crushing chamber in accordance with the teachings of the present invention. The crushing chamber is shown as generally rectangular and the output pipes 80 and 82 of the means 72 and 74 respectively are fed into the chamber 76. The output pipes 80 and 82 enter the chamber 76 at an angle such that the stream of material from each pipe 80 and 82 intersects but does not hit the other respective pipe. In addition, the ends of the pipes 80 and 82 are spaced apart from each other a distance sufficient to dissipate any static charge which builds up on the pieces of aggregate material so that the pieces of aggregate material impact against each other without any repulsive forces created by the static charge. Impinging plates 84, 86 and 88 are provided in the chamber 76. The impinging plate 84 is provided at $90^o$ to the flow from the pipe 82 while the impinging plate 88 is provided at $90^o$ to the flow from the pipe 80. In addition, the impinging plate 86 is provided between the plates 84 and 88.

Referring to Figure 16 shown therein are construction details for a conveying means suitable to be utilized as the means 72 and 74. While in Figure 15 it indicates that means 72 is illustrated, this is only for the purposes of illustration and simplicity of description and the means 74 would be identical.

As is shown in Figure 15, a portion 90 of the auger flights 92 is removed. At least one and one-half flights of the auger are provided at the end of the shaft 94. This portion 90 is provided so that the additional crushing of the aggregate material occurs in the means 72. The crushing which occurs in this portion 90 is crushing created by the pieces of aggregate material being rubbed and pressed together. Since they are very dry, they are very susceptible to being broken down by this rubbing and pressing. Furthermore, as is shown in Figure 16 the end of the last flight. of the auger flights 92 is provided with an angled surface 98. This angled surface is arranged such that as the auger shaft 94 rotates the auger flights 92, this surface 98 creates a slight pressure on the aggregate material in the direction of the arrow A. In addition, the beginning of the one and one-half flights 96 at the end of the shaft 94 is also provided with a face 100 which is angled such that as the flights 96 are rotated, this face 100 creates a slight back pressure in the direction of the arrow B. In this manner, the pressure on the aggregate material in the portion 90 is increased.

In operation, large aggregate material enters the hoppers of the means 72 and 74 and as it is conveyed down the auger flights 92 it enters the portion 90 wherein it is rubbed and pressed together and broken down before being conveyed down the output pipes 80 and 82.

The amount of hot, dry inert gas is adjusted such that the velocity of its flow is 22,000 to 36,000 feet per minute. Accordingly, the volume of hot, dry inert gas provided to the means 72 and 74 is equal to the velocity of the gas in the pipes 80 and 82 times the cross-sectional area thereof.

The large aggregate material is, therefore, carried through the pipes 80 and 82 at very high velocities and enters the crushing chamber 76 via the pipes 80 and 82. The streams of aggregate material from the pipes 80 and 82 intersect in the chamber 76 and collide. Accordingly, since the pieces are moving at very high velocity and are very dry, they are shattered by the impact. In some cases, there does not occur any impact and these pieces of aggregate material impinge respectively on the plates 84 and 88. In addition, there may occur glancing impacts between two pieces of aggregate material and also aggregate material is thrown off in odd directions when the colliding aggregate material shatters and it is this material which impinges upon the impinging plate 86. The aggregate material contained in the crushing chamber 76 falls to the bottom wherein the material is then fed to the cleaner and classifier 78 and the fine particles are removed in the cleaner and the classifier and those pieces larger than the desired size are returned to the inputs of the means 72 and 74 to be crushed again in the crushing chamber 76. This process continues until all of the aggregate material is reduced to the desired size and the fine aggregate material is placed in storage. Typically, utilizing an autogenous crusher 70 such as described herein, the aggregate material can be reduced to a particle size smaller than 600 mesh.

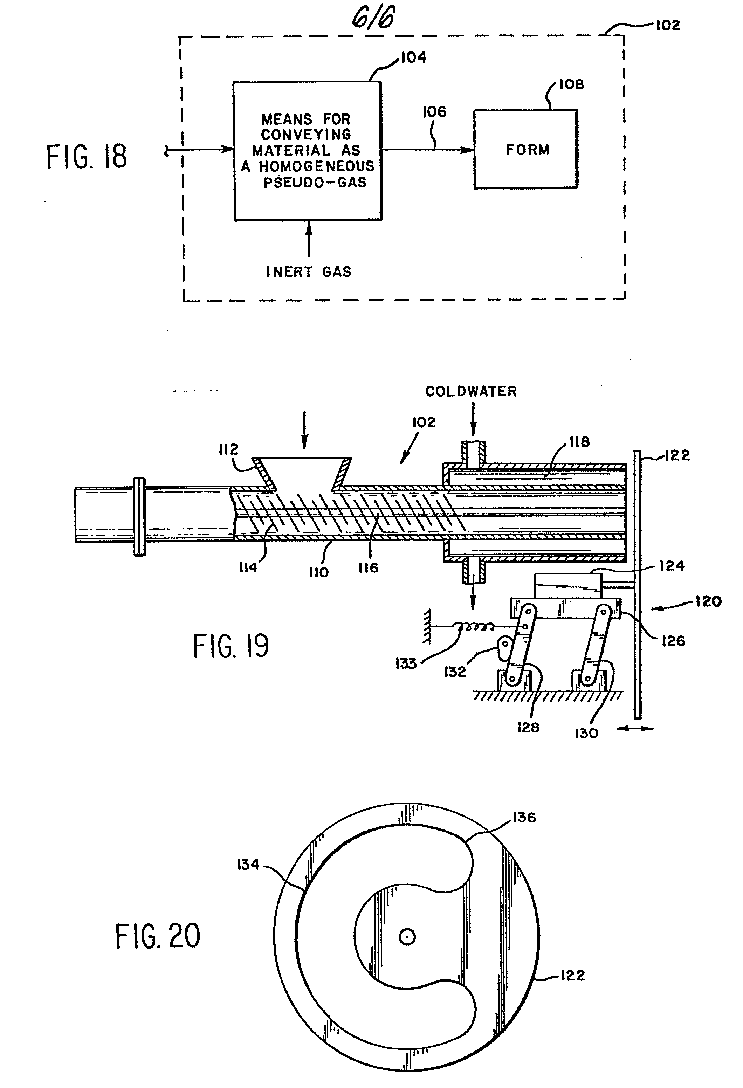

Once the aggregate material has all been reduced to a fine powder, it may be desirable to pelletize the fine particles. Shown in Figure 17 is a pelletizer 102 which is connected to the storage 52. To pelletize the fine powder, two types of pelletizer can be utilized. These two types are shown in Figure 18 and Figures 19 and 20. The simplest is that shown in Figure 18 and consists essentially of another means for conveying aggregate materials as a homogeneous pseudo-gas 104 which creates a high speed flow of fine particles in an output pipe 106. The output of the pipe 106 is sprayed into a fixed form 108. The form may be some type of a mold which is small or could be a mold as large as desired. Particles shot out of the means 104 are fired out at a high velocity and impact and compact themselves in the form 108. In addition, it is preferable that the end of the pipe 106 is located at a distance sufficiently far that any electrostatic charge on the particles will dissipate so that the compaction of the fine particles in the form 108 will occur without being hindered by the repulsive forces of the electrostatic charge. This distance is typically 1 to 4 feet.

Referring to Figure 19 shown therein is a second type of pelletizer in accordance with the teachings of the present invention. This pelletizer operates more rapidly than that of Figure 18 and creates cylindrical pellets with a central longitudinal hole. Pelletizer 102 in Figure 19 includes a barrel 110, an input hopper 112, a double lead pitch auger 114 provided on an auger shaft 116 and a cooling water jacket provided around the end portion of the barrel 110. As is seen in Figure 19, the double lead pitch auger flights 114 terminate at some distance from the end of the barrel 110. This distance is selected quantitatively. It should be apparent from the above description and from Figure 19 that the pelletizer 102 is essentially of the same construction as a means for conveying aggregate materials as a homogeneous pseudo-gas except that the air chamber and conveying pipe have been removed from the end of the barrel 110.

Since the fine powder is going to be pelletized in the end portion 118 of the barrel 110, this end portion 118 should be provided with a hard, slick interior surface. This hard, slick interior surface is provided to resist wear from the formation of the pellets. The pelletizer is further provided with a flying knife 120. The flying knife comprises a flying knife blade 122 as is shown in Figure 20, a motor 124 for rotating the flying knife blade 122 which is mounted on a table 126. The table is connected to ground via links 128 and 130 which are rotatably coupled to one end of the table 126 and rotatably coupled at the other end to the ground. The rotating cam 132 engages against the link 128. A spring 133 is connected from the link 128 to ground and hold the link 128 into solid engagement with the surface of the rotating cam 132. The flying blade 122 is essentially a disc provided with a semicircular cutout 134. The width of the semicircular cutout 134 is slightly greater than the inner diameter of the barrel 110. Furthermore, one portion 136 of the semicircular cutout 134 is a knife edge. This knife edge extends around the end of the cutout 134 and consists of essentially a half circle edge.

In operation, the fine powdered aggregate material enters the hopper 112 and is conveyed down the barrel 110 rapidly by the double lead pitch auger flights 114. When the powdered material reaches the end of the auger flights 114 it begins to pile up until it completely closes the end of the barrel 110. Once the end of the barrel 110 is closed by the buildup of the fine powdered aggregate material, the rest of the powdered material is forced into the back of the powdered material in front of it by the auger flights 114. Accordingly, the materials are continuously compacted. Furthermore, since the end of the auger 114 is shaped like the end surface 98 of the auger flights illustrated in Figure 16, this end further presses and compacts the powdered material. In this way, a solid pellet is formed which continues to move towards the end of the barrel. When the end of the solid pellet reaches the end of the barrel it extends out the end of the barrel until it extends through the cutout 134 in the flying knife blade 122. Since the flying knife blade 122 is being rotated by the motor 124, every time the flying knife blade completes one revolution it cuts the pellet of the compacted material coming out of the end of the barrel 110. In addition, the rotating cam 132 causes the motor together with the flying knife blade 122 to oscillate back and forth.

The flying knife blade 122 is caused to oscillate such that when the cutting edge 136 contacts the surface of the pellet the flying knife blade 122 is moving at the same forward velocity as the pellet coming out of the end of the barrel 110. In this way there is a zero velocity difference between the flying knife blade and the pellet. This zero velocity must be maintained until the flying knife blade 122 has rotated sufficiently so that the pellet can again project through the cutout 134. At this point, the cam 132 allows the flying knife blade 122 to oscillate back towards the end of the barrel 110 and the process starts again. It should be apparent that by varying the diameter and the speed of rotation of the flying knife blade 122, the length of the pellet produced can be controlled.

It should also be apparent that while the above descriptions were made in terms of one of the embodiments described in our co-pending application based on United

- 21 -

States Patent Application Serial No. 378,472 filed on May 14, 1982, other embodiments may also be utilized without departing from the spirit and scope of this invention as defined in the appended claims.  Also, whenever the aggregate material must be transferred from storage to some processing means or from one processing means to another processing means, this transfer could also be made by an additional means for conveying aggregate materials as a homogeneous pseudo-gas together with an appropriate conveying pipe and a cyclone.  In addition, it should be apparent that at all times the aggregate material is contained within a closed pipe or chamber.  Accordingly, any dust or very fine particles contained therein will not escape and air pollution will be reduced.

It should be apparent to those skilled in the art that the above described embodiments are merely illustrative of but a few of the many possible specific embodiments which incorporate the principles of the present invention. Numerous and varied other arrangements can be readily devised by those skilled in the art without departing from the spirit and scope of the invention as defined in the appended claims.

CLAIMS:

1.      A conveying and processing system for aggregate material comprising:

a conveying pipe;

a means for conveying aggregate material as a homogeneous pseudo-gas in said conveying pipe, said means conveying said aggregate material in said pipe by creating a zero velocity boundary layer of gas around the interior surface of said conveying pipe and a high speed, smooth gas flow in a remainder of said conveying pipe and by mixing said aggregate material into said high speed, smooth gas flow at a predetermined volumetric ratio of gas to aggregate material; and

a cyclone coupled to an end of said conveying pipe for receiving the aggregate material and for separating moisture in said conveying pipe from the aggregate material.

2.      A conveying and processing system according to Claim 1 further comprising a self-feeder feeding the aggregate material into an input of said means for conveying aggregate material.

3.      A conveying and processing system according to Claims 1 or 2, wherein said gas is hot, dry air.

4.      A conveying and processing system according to Claim 3 further comprising a booster for restoring said zero velocity boundary layer provided in said conveying pipe between said means for conveying and said cyclone.

5.    A conveying and processing system according to Claim 4, wherein said booster comprises an air chamber surrounding and communicating with said conveying pipe and a means for injecting hot, dry air into said air chamber.

6.    A conveying and processing system according to Claim 4, wherein said booster comprises another cyclone for receiving the aggregate material and for separating moisture in said conveying pipe from said aggregate material; and

another means for conveying aggregate material as a homogeneous pseudo-gas in said conveying pipe coupled to the aggregate material output of said another cyclone.

7.    A conveying and processing system according to any one of Claims 3 to 5 further comprising a cleaner and classifier coupled to the output of said first mentioned cyclone for cleaning said aggregate material and for classifying said aggregate material by volume and mass.

8.    A conveying and processing system according to Claim 7, wherein said cleaner and classifier comprises:

another means for conveying aggregate material as a homogeneous pseudo-gas in an output pipe coupled to the output of said cyclone, said another means for conveying said aggregate material conveying said aggregate material in said output pipe by creating a zero velocity boundary layer of hot, dry inert gas around an interior surface of said output pipe and a high speed, smooth, hot, dry inert gas flow in a remainder of said output pipe and by mixing said aggregate material into said high speed, smooth, hot, dry inert gas flow at a predetermined volumetric ratio of hot, dry gas to aggregate material;

a classifying chamber comprising at least a first and second hopper placed longitudinally in said classifying chamber, said output pipe of said another means for conveying aggregate material firing said aggregate material into said classifying chamber at an upward angle whereby the greater mass and larger pieces of said aggregate material travel farther falling into said second hopper and smaller mass, smaller volumer pieces of aggregate material travel a lesser distance falling into said first hopper; and

a bag house coupled to said classifying chamber for sucking out dust and very fine particles in the atmosphere of said classifying chamber.

9.     A conveying and processing system according to Claim 8, wherein said classifying chamber further comprises at least one air knife for further affecting classification of said aggregate material.

10.     A conveying and processing system according to Claim 8 or 9, wherein the large particles from said second hopper of said classifying chamber are crushed in an autogeneous crusher.

11.    A conveying and processing system according to Claim 10, wherein said autogeneous crusher comprises a pair of another means for conveying aggregate material as a homogeneous pseudo-gas in an output pipe, said means for conveying said aggregate material conveying said aggregate material in said output pipe by creating a zero velocity boundary layer of hot, dry inert gas around an interior surface of said output pipe and a high speed, smooth, hot, dry inert gas flow in a remainder of said output pipe and by mixing said aggregate material into said high speed, smooth, hot, dry inert gas flow at a predetermined volumetric ratio of hot, dry inert gas to aggregate material;

a crushing chamber wherein said output pipes of said pair of another means for conveying aggregate material fire said aggregate material in two intersecting streams of said aggregate material; and

another cleaner and classifier for separating that portion of said crushed aggregate material which is smaller than some predetermined size and for feeding the remainder of said crushed aggregate material back to the inputs of said pair of another means for conveying aggregate material coupled to output of the crushing chamber.

12.    A conveying and processing system according to Claim 11, wherein said output pipes of said pair of another means for conveying aggregate material are arranged and configured such that said stream of aggregate material from one output pipe does not hit the other output pipe and further comprising at least two impinging plates provided in said crushing chamber, one of said impinging plates being provided transversely to flow of material from one output pipe and the other impinging plate being provided transversely to the flow of material from the other output pipe.

13. A conveying and processing system according to Claim 11 or 12, wherein each of said pair of another means for conveying aggregate material comprises:

an auger barrel with a material input adjacent one end thereof;

an air chamber surrounding another end thereof;

a means for injecting low pressure, hot, dry inert gas into said air chamber;

an auger shaft extending from said one end to said other end in said auger barrel;

a means for rotating said auger shaft;

at least one and one-half flights provided on an end of said auger shaft; and

a plurality of auger flights provided on said auger shaft from a location subjacent said material input to a position on said auger shaft which is some predetermined distance from said at least one and one-half auger flights whereby a space is created in said auger barrel between an end of said plurality of auger flights and a beginning of said one and one-half auger flights wherein said aggregate material is pressed and rubbed together to facilitate crushing of said aggregate material.

14.     A conveying and processing system according to any one of Claims 10 to 13 further comprising a pelletizer for forming said aggregate material into solid pellets.

15.     A conveying and processing system according to Claim 14, wherein said pelletizer comprises:

a pellet form; and

a means for conveying aggregate material as a homogeneous pseudo-gas for spraying and compacting said aggregate material in said pellet form, said means for conveying said aggregate material conveying said aggregate material in an output pipe by creating a zero velocity boundary layer of hot, dry inert gas around an interior surface of said output pipe and a high speed, smooth, hot, dry inert gas flow in a remainder of said output pipe and by mixing said aggregate material in said high speed, smooth, hot, dry inert gas flow at predetermined volumetric ratio of hot, dry inert gas to the aggregate material.

16.     A conveying and processing system according to Claim 14, wherein said pelletizer comprises:

an auger barrel having an aggregate material input adjacent one end of said auger barrel, the other end of said auger barrel being open;

a cooling means provided around said other end of said auger barrel;

an auger shaft extending a full length of said auger barrel;

a means for rotating said auger shaft;

a plurality of dual lead pitch auger flights provided on said auger shaft from a point subjacent said material input to a point some predetermined distance from said other end of said auger barrel whereby said aggregate material is compacted into a pellet in a space within said auger barrel from said end of said barrel to said position wherein said plurality of auger flights ends; and

a means for cutting said pellet into a plurality of pellets provided adjacent said other end of said auger barrel.

17. A conveying and processing system according to Claim 16, wherein said means for cutting said pellet comprises a longitudinally oscillating and rotating flying knife.

18. A cleaner and classifier for use in a conveying and processing system for aggregate material comprising:

a means for conveying aggregate material as a homogeneous pseudo-gas in an output pipe, said means for conveying said aggregate material conveying said aggregate material in said output pipe by creating a zero velocity boundary layer of hot, dry inert gas around an interior surface of said output pipe and a high speed, smooth, hot, dry inert gas flow in a remainder of said output pipe and by mixing aggregate material into said high speed, smooth, hot, dry inert gas flow at a predetermined volumetric ratio of hot, dry gas to aggregate material;

a classifying chamber comprising at least a first and a second hopper placed longitudinally in said classifying chamber, said output pipe of said means for conveying aggregate material firing said aggregate material into said classifying chamber at an upward angle whereby the greater mass and larger pieces of said aggregate material travel farther falling into said second hopper and smaller mass, smaller volume pieces of aggregate material travel a lesser distance falling into said first hopper; and

a bag house coupled to said classifying chamber for sucking out dust and very fine particles in the atmosphere of said classifying chamber.

19.  A cleaner and classifier according to Claim 18, wherein said classifying chamber further comprises at least one air knife for further affecting classification of said aggregate material.

20.  An autogeneous crusher for use in a conveying and processing system for aggregate material comprising;

a pair of means for conveying aggregate material as a homogeneous pseudo-gas in an output pipe, said means for conveying said aggregate material conveying said aggregate material in  said output pipe by creating a zero velocity boundary layer of hot, dry inert gas around  an interior surface of said output pipe and a high speed, smooth, hot, dry inert gas flow in a remainder of said output pipe and by mixing said aggregate material into said high speed, smooth, hot, dry inert gas flow at a predetermined volumetric ratio of hot, dry inert gas to aggregate material;

a crushing chamber wherein said output pipes of said pair of means for conveying aggregate material fires said aggregate material into intersecting streams of said aggregate material; and

a cleaner and classifier for separating that portion of said crushed aggregate material which is smaller than some predetermined size and for feeding the remainder of said crushed aggregate material back to the inputs of said pair of means for conveying aggregate material coupled to the output of the crushing chamber.

21. An autogenous crusher according to Claim 20, wherein said cleaner and classifier comprises:

another means for conveying aggregate material as a homogeneous pseudo-gas in another output pipe coupled to the output of said crushing chamber, said another means for conveying said aggregate material conveying said aggregate material in said another output pipe by creating a zero velocity boundary layer of hot, dry inert gas around an interior surface of said output pipe and a high speed, smooth, hot, dry inert gas flow in a remainder of said output pipe and by mixing said aggregate material into said high speed, smooth, hot, dry inert gas flow at a predetermined volumetric ratio of hot, dry inert gas to aggregate material;

a classifying chamber comprising at least a first and a second hopper placed longitudinally in said classifying chamber, said output pipe of said another means for conveying aggregate material firing said aggregate material into said classifying chamber and at an upward angle whereby the greater mass and larger pieces of said aggregate material travel farther falling into said second hopper and smaller mass, smaller volume pieces of aggregate material travel a lesser distance falling into said first hopper; and

a bag house coupled to said classifying chamber for sucking out dust and very fine particles in the atmosphere of said classifying chamber.

22. An autogenous crusher according to Claim 21, wherein said output pipes of said pair of another means for conveying aggregate material are arranged and configured such that said stream of aggregate material from one output pipe does not hit the other output pipe and further comprising at least two impinging plates provided in said crushing chamber, one of said impinging plates being provided transversely to the flow of material from one output pipe and the other impinging plate being provided transversely to the flow of material from the other output pipe.

23. An autogenous crusher according to Claim 22, wherein each of said pair of means for conveying aggregate material comprises:

an auger barrel with a material input adjacent one end thereof;

an air chamber surrounding another end thereof;

a means for injecting low pressure, hot, dry inert gas into said air chamber;

an auger shaft extending from said one end to said other end in said auger barrel;

a means for rotating said auger shaft;

at least one and one-half auger flights provided on an end of said auger shaft; and

a plurality of auger flights provided on said auger shaft from a location subjacent said material input to a position on said auger shaft which is some predetermined distance from said at least one and one-half auger flights whereby a space is created in said auger barrel between an end of said plurality of auger flights and a beginning of said one and one-half auger flights wherein said aggregate material is pressed and rubbed together to facilitate crushing of said aggregate material.

24. A pelletizer for use in a conveying and processing system for aggregate material comprising:

a pellet form; and

a means for conveying aggregate material as a homogeneous pseudo-gas for spraying and compacting said aggregate material in said pellet form, said means for conveying said aggregate material conveying said aggregate material in an output pipe by creating a zero velocity boundary layer of hot, dry inert gas around an interior surface of said output pipe and a high speed, smooth, hot, dry inert gas flow in a remainder of said output pipe and by mixing said aggregate material into said high speed, smooth, hot, dry inert gas flow at a predetermined volumetric ratio of hot, dry inert gas to the aggregate material.

25.     A pelletizer for use in a conveying and processing system for aggregate material comprising:

an auger barrel having an aggregate material input adjacent one end of said auger barrel, the other end of said auger barrel being open;

a cooling means provided around said other end of said auger barrel;

an auger shaft extending a full length of said auger barrel;

a means for rotating said auger shaft;

a plurality of dual lead pitch auger flights provided on said auger shaft from a point subjacent said material input to a point some predetermined distance from said other end of said auger barrel whereby said aggregate material is compacted into a pellet in a space within said auger barrel from said end of said barrel to said position wherein said plurality of auger flights ends; and

a means for cutting said pellet into a plurality of pellets provided adjacent said other end of said auger barrel.

26.     A pelletizer according to Claim 25, wherein said means for cutting said pellet comprises a longitudinally oscillating and rotating flying knife.

FIG. 1

FIG. 2

FIG. 3

FIG. 4

FIG. 5

36 32 30 38 2'

2

HOT DRY
AIR

36 34

FIG. 6

MOISTURE

30

2

CYCLONE
40

MEANS FOR
CONVEYING
MATERIAL AS
A HOMOGENEOUS
PSEUDO-GAS

2'

42

AIR

8

SELF
FEEDER

MATERIAL

MEANS FOR
CONVEYING
MATERIAL AS
A HOMOGENEOUS
PSEUDO-GAS

4

MOISTURE

CYCLONE

50

CLEANER
AND
CLASSIFIER

6

AIR

LARGE

FINE

STORAGE
52

FIG. 7

0099653

3/6

FIG. 8

FIG. 9

FIG. 10

FIG. 11

FIG. 12

5/6

FIG. 13

TO CLEANER
AND CLASSIFIER

FIG. 14

FIG. 17

FINE

STORAGE

PELLETIZER

FIG. 15

HOT DRY
INERT GAS

FIG. 16

102

104

FIG. 18

| MEANS FOR CONVEYING MATERIAL AS A HOMOGENEOUS PSEUDO-GAS |

106

108

FORM

INERT GAS

COLDWATER

102

112

118

122

114   110   116

124

120

126

FIG. 19

133   132

128   130

FIG. 20

134

136

122